# EUROPÄISCHE PATENTSCHRIFT

(11) **EP 1 631 951 B1**
(45) Veröffentlichungstag und Bekanntmachung des Hinweises auf die Patenterteilung: **24.01.2007**
(21) Anmeldenummer: 04739814.4
(22) Anmeldetag: 11.06.2004
(51) Int. Cl.: G09F 3/02

(54) **ETIKETTENBOGEN**
LABEL SHEET
FEUILLE POUR ETIQUETTES

(30) Priorität: 11.06.2003 DE 10326298
(43) Veröffentlichungstag der Anmeldung: 08.03.2006
(73) Patentinhaber: Avery Dennison Zweckform Office Products Europe GmbH, 83626 Oberlaindern/Valley (DE)
(72) Erfinder: UTZ, Martin, 83703 Gmund am Tegernsee (DE)
(74) Vertreter: Siegert, Georg
(86) Internationale Anmeldenummer: PCT/EP2004/006324
(87) Internationale Veröffentlichungsnummer: WO 2004/109408

(56) Entgegenhaltungen:
- DE-A1- 19 724 648
- US-A- 5 487 929
- US-A1- 2002 011 306
- PATENT ABSTRACTS OF JAPAN Bd. 2003, Nr. 09, 3. September 2003 (2003-09-03) & JP 2003 150058 A (NICHIBAN CO LTD), 21. Mai 2003 (2003-05-21)

## Beschreibung

Die Erfindung betrifft einen Etikettenbogen, ein daraus hergestelltes Etikett und ein Verfahren zur Herstellung des Etiketts aus dem Etikettenbogen.

Zum individuellen Bedrucken von Papiermaterialien ist der Einsatz von Inkjet-Desktop- sowie Laserdruckern weit verbreitet. Nachteilig ist jedoch, dass die Farben mit derZeit verblassen und nur eine geringe Beständigkeit gegenüber Wasser, Schmutz, Chemikalien, UV-Strahlung und mechanischer Einwirkung aufweisen, so dass die bedruckten Materialien weder im Innen- noch Außenbereich für eine Langzeitanwendung geeignet verwendbar sind. Darüber hinaus zeigen Papieretiketten, wenn sie für längere Zeit der Luft ausgesetzt werden, Verfärbungen, typischerweise ein Vergilben des Papiers.

Damit Materialien, wie beispielsweise Etiketten, die mittels eines Inkjet-Desktop- oder Laserdruckers bedruckt wurden, sich auch für Langzeitanwendungen eignen, wird nach Verfahren gesucht, die die Beständigkeit des Etiketts und seines Aufdrucks gegenüber den oben genannten möglichen Einflüssen verbessern.

Um die Wasserbeständigkeit eines Etiketts zu verbessern, ist es bekannt, Papier mit speziellen Inkjet-Beschichtungen zu überziehen, was gleichzeitig auch zu einer besseren Druckqualität führt. Eine Wasserfestigkeit, die eine Außenanwendung erlauben würde, kann damit jedoch nicht erreicht werden. Nachteilig an dieser Ausführungsform ist außerdem, dass durch die spezielle Beschichtung die Lichtbeständigkeit nicht verbessert ist. So führt in der Regel eine mehrmonatige Anwendung im Innen- oder Außenbereich dazu, dass die Farben so weit verblassen, dass ein Lesen der farbigen Schrift und das Erkennen des ursprünglichen Bildes nicht mehr möglich ist.

Weiterhin ist im Stand der Technik bekannt, die Beständigkeit von Materialien durch Laminieren mit einer Folie zu verbessern. So beschreibt die DE 1 296 363 ein Verfahren, bei dem ein Papierbogen mit einem biegsamen, zähen und durchsichtigen Kunststofffilm mit Hilfe eines Klebstoffüberzugs auf der dem Papierbogen zugewandten Seite des Kunststofffilms unter Erwärmen verklebt wird. Diese Kunststofffilme sind resistent gegen Lösungsmittel, wie Aceton, Tetrachlorkohlenstoff und Heptan, und zeigen keine Degradation, wenn sie der Einwirkung von Wasser ausgesetzt werden. Das Verfahren hat jedoch den Nachteil, dass die Laminierung technisch aufwendig ist und der Kunststoffüberzug vor dem Verkleben zunächst bei 50 bis 85°C aktiviert werden muss.

Ferner ist bekannt, bei industriellen Druckern pigmentierte Tinten einzusetzen, um die Lichtbeständigkeit der Farben zu verbessern. Der Einsatz solcher pigmentierter Tinten ist jedoch bisher, abgesehen von der Farbe Schwarz, bei Inkjet-Desktop-Druckern nicht möglich.

Weiterhin wird in der DE 40 03 129 eine Folie auf Styrolbasis beschrieben, die einen UV-Absorber vom Benzophenontyp oder Benzotriazoltyp und/oder einen Lichtstabilisator vom Typ der sterisch gehinderten Amine enthält. Die Produkte sind frei von Fischaugengel, zeigen keine Verfärbung bei feuchter Hitze, lassen sich gut bedrucken und sind wetterbeständig. Nachteilig ist jedoch, dass sich die Folien auf Styrolbasis nur mit einer speziellen Druckfarbe für Polystyrol bedrucken lassen und nicht mit handelsüblichen Inkjet-Desktop- oder Laserdruckern.

Darüber hinaus ist es grundsätzlich auch bekannt, dass die Beständigkeit eines Etiketts durch Laminierung mit einer transparenten Folie verbessert werden kann. Eine solche Laminierung erweist sich jedoch als sehr aufwendig, da das Etikett und die Folie als separate Bögen oder Rollen vorliegen und die Folie in einem zusätzlichen Verfahrensschritt entsprechend der Größe des Etiketts zugeschnitten werden muss. Da das Laminieren ferner nach Augenmaß erfolgt, passiert es häufig, dass das Etikett schief mit der Folie verklebt wird, was sich auf das Aussehen des resultierenden laminierten Etiketts nachteilig auswirkt. Auch ein Repositionieren der Folie ist nicht möglich, da der Klebstoff, einmal mit der Oberfläche eines Papieretiketts verklebt, fest anhaftet und nicht wieder ablösbar ist. Darüber hinaus tritt gerade bei großformatigen Etiketten das Problem auf, dass sich während des Verklebens zwischen dem Etikett und der Laminierfolie Luftblasen bilden, die dem Etikett ebenfalls ein unschönes Aussehen verleihen.

Um ein möglichst positionsgenaues Laminieren eines Etiketts mit einer Folie zu gestatten, wurde von der Firma Nichiban ein Etikettenbogen entwickelt, in dem das Etikett und die transparente Laminierfolie in einem einzigen Bogen integriert sind. Der Etikettenbogen besteht aus folgenden Schichten: Laminierfolie, Haftklebstoffschicht, Releaseschicht, Papierschicht. Ferner weist der Etikettenbogen Stanzlinien auf, wodurch Teilbereiche in Etikettengröße gebildet werden. Die Teilbereiche, die in der Papierschicht, einschließlich Releaseschicht, gebildet werden, sind kleiner als die Teilbereiche, die in der Laminierfolie, einschließlich Haftklebstoffschicht, gebildet werden, und werden von diesen randseitig überragt. Zur Laminierung eines Etiketts wird der dem Etikett entsprechende Teilbereich aus der Papierschicht entfernt und umgekehrt wieder in das entstandene Fenster auf die Haftklebstoffschicht aufgeklebt, so dass nun die bedruckbare Schicht mit der Haftklebstoffschicht verklebt ist. Danach wird der Teilbereich der Laminierfolie zusammen mit dem aufgeklebten Etikett aus dem Etikettenbogen entfernt. Aufgrund der überstehenden Ränder der Laminierfolie, die das aufgeklebte Etikett überragen, lässt sich dieser Verbund wiederum auf beliebige Gegenstände aufkleben. Der oben beschriebene Etikettenbogen der Firma Nichiban hat jedoch den Nachteil, dass nur relativ kleine Etiketten auf diese Weise wirksam verklebt werden können. Bei größeren Etiketten tritt das Problem auf, dass während des Laminierens Luftblasen zwischen dem Etikett und der Laminierfolie eingeschlossen werden können, die das Aussehen des resultierenden laminierten Etiketts erheblich verschlechtern. Darüber hinaus ist es nicht möglich, die Position eines einmal aufgeklebten Papieretiketts nachträglich zu korrigieren.

US 2002/011306 beschreibt haftende Etiketten, die in der Haftklebstoffschicht Bereiche aus einem nichtklebenden Material aufweisen, wodurch die Entfernung von eingeschlossenen Luftblasen ermöglicht wird. Zu dem gleichen Zweck kann die Haftklebstoffschicht auch eine Sheffield-Rauhigkeit von wenigstens 10 oder wenigstens 75 oder wenigstens 150 aufweisen.

DE 197 24 648 A1 beschreibt ein selbstklebendes Flächengebilde, das ein Substrat, eine Antihaftbeschichtuna auf der Oberseite des Substrats und eine Haftklebebeschichtung auf der Unterseite des Substrats umfasst und dadurch gekennzeichnet ist, das die Haftklebebeschichtung in Form eines Rasters vorliegt und dass die antihaftbeschichtete Oberseite des Substrats eine Rauhigkeit von mindestens 1 µm (gemessen nach ISO 8791-4) aufweist.

Um die oben genannten Nachteile zu überwinden, besteht die der Erfindung zu Gunde liegende Aufgabe darin, einen Etikettenbogen bereitzustellen, mit dessen Hilfe Etiketten auf einfache, effektive und äußerst exakte Weise mit einer Folie laminiert werden können, wodurch sie beständig werden, beispielsweise gegenüber Licht, UV-Strahlung, Ozon, Schmutz, Wasser, Chemikalien und mechanischen Einwirkungen, und sich so hervorragend für eine Langzeitanwendung sowohl im Innenals auch Außenbereich eignen. Außerdem sollen die aus dem Etikettenbogen hergestellten Etiketten zwischen der Laminierfolie und der bedruckbaren Schicht frei von eingeschlossenen Luftblasen sein, insbesondere auch dann, wenn es sich um großformatige DIN-A4- oder DIN-A3-Etikstten handelt. Eine zusätzliche Aufgabe der vorliegenden Erfindung besteht darin, dass die Laminierfolie im Bedarfsfall repositionierbar sein soll.

Die obige Aufgabe wird gelöst durch einen Etikettenbogen, umfassend in folgender Reihenfolge: ein Trägermaterial, eine Haftklebstoffschicht, eine Releaseschicht und eine bedruckbare Schicht, wobei das Trägermaterial eine transparente Folie darstellt und sowohl die bedruckbare Schicht, einschließlich Releaseschicht, einerseits als auch das Trägermaterial, einschließlich Haftklebstoffschicht, andererseits eine oder mehrere Abtrennlinien aufweisen, die so aufgebracht sind, dass Teilbereiche gebildet werden und die Abtrennlinie(n) in der Trägerschicht, einschließlich Haftklebstoffschicht, die Abtrennlinie(n) in der bedruckbaren Schicht, einschließlich Releaseschicht, randseitig überragt (überragen), dadurch gekennzeichnet, dass die Haftklebstoffschicht in Form eines Rasters vorliegt, oder die bedruckbare Schicht auf ihrer Oberseite eine Rauhigkeit von 4 bis 50 µm (DIN 4768) aufweist.

Der erfindungsgemäße Etikettenbogen kann jegliche Größe aufweisen, bevorzugt eine Größe im Format von DIN-A4 oder DIN-A3.

Die transparente Folie hat in dem erfindungsgemäßen Etikettenbogen die Funktion eines Trägermaterials und wirkt in dem aus dem Etikettenbogen herstellbaren Etikett als Schutzlaminat, so dass die darunter liegenden Schichten vor Feuchtigkeit geschützt sind.

Die Erfinder der vorliegenden Anmeldung haben gefunden, dass entweder durch die Auftragung des Haftklebers in Rasterform oder durch die Verwendung einer bedruckbaren Schicht, die auf ihrer Oberseite eine Rauhigkeit von 4 bis 50 µm (DIN 4768) aufweist, nach dem Laminieren der bedruckbaren Schicht mit der transparenten Folie nichtklebende Bereiche zwischen Laminierfolie und bedruckbarer Schicht gebildet werden. Durch diese nichtklebenden Bereiche können Luftblasen, die in dem Laminierungsschritt zwischen Laminierfolie und der bedruckbaren Schicht naturgemäß eingeschlossen werden, in Richtung der Ränder des Laminats bewegt werden, beispielsweise durch manuelles Herausstreichen.

Als transparente Folie kann jegliche bekannte Folie verwendet werden. Damit der erfindungsgemäße Etikettenbogen mit einem Laserdrucker bedruckt werden kann, sollte die transparente Folie hitzstabil sein, wie beispielsweise Folien aus Polymethylpenten (TPX) oder Polyethylenterephthalat (PET). Besonders bevorzugt wird als transparente Folie eine Folie aus PET verwendet. Die transparente Folie weist bevorzugt eine Dicke von 26 bis 200 µm auf, besonders bevorzugt 50 µm.

Die transparente Folie kann zur Stabilisierung bekannte HALS-Verbindungen ("hindered amine light stabilizers") enthalten. Ferner ist die transparente Folie in einer besonders bevorzugten Ausführungsform UV-stabilisiert, d.h. sie enthält eine oder mehrere UV-absorbierende Komponenten. Solche UVabsorbierenden Komponenten sind dem Fachmann bekannt und können beispielsweise Benzophenon- oder Benzotriazolverbindungen sein.

Unter dem Ausdruck "bedruckbare Schicht" ist eine Schicht zu verstehen, die mit einem Inkjet-Desktop-Drucker oder LaserDrucker bedruckt werden kann. Bevorzugt ist die bedruckbare Schicht ein unbeschichtetes Papier, ein unbeschichteter Karton oder ein mit einer Inkjet- oder Laserdruckerbeschichtung beschichtetes Papier oder beschichteter Karton. Das Papier bzw. der Karton weist bevorzugt eine Grammatur von 70 bis 200 g/m² auf.

Auf der Rückseite der bedruckbaren Schicht ist eine Releaseschicht aufgebracht, d.h. die Releaseschicht befindet - sich in dem erfindungsgemäßen Etikettenbogen zwischen der bedruckbaren Schicht und der Haftklebstoffschicht. Die Releaseschicht stellt bevorzugt eine Silikonschicht dar. Damit aufgrund von Migration des Silikons beim Auftragen der Releaseschicht auf die Rückseite der bedruckbaren Schicht die Druckqualität nicht beeinträchtigt wird, ist es gemäß einer bevorzugten Ausführungsform empfehlenswert, die bedruckbare Schicht auf Ihrer Unterseite zunächst mit einer PET-Folie zu verkleben. Danach wird die PET-Folie mit der Releaseschicht versehen. Alternativ kann auch eine bereits silikonisierte, also mit einer Releaseschicht versehene, PET-Folie verwendet werden.

Die Abtrennlinien sind so aufgebracht, dass Teilbereiche gebildet werden. Diese Teilbereiche können eckig, z.B. quadratisch oder rechteckig, rund oder oval sein. Es ist erfindungswesentlich, dass die Abtrennlinie in der Trägerschicht die Abtrennlinie in der bedruckbaren Schicht randseitig überragt, bevorzugt um 5 bis 50 %, besonders bevorzugt 10 bis 30 %. Das bedeutet, dass die Teilbereiche, die durch die Abtrennlinie in der transparenten Folie erzeugt werden, größer sind als die Teilbereiche der bedruckbaren Schicht. Die Abtrennlinie kann eine Schnitt-, Stanz- oder Perforationslinie sein. Die Abtrennlinie kann insbesondere im Fall der Teilbereiche, die in der Trägerschicht, einschließlich Haftkleberschicht, gebildet werden, auch den äußeren Kanten des Etikettenbogens entsprechen. Wenn alle Abtrennlinien, die die Teilfläche aus Trägerschicht und Haftkleberschicht bilden, den äußeren Kanten des Etikettenbogens entsprechen, weist diese Teilfläche dieselbe Größe auf wie der Etikettenbogen selbst. Gemäß einer bevorzugten Ausführungsform hat der Teilbereich der Trägerschicht, einschließlich Haftkleberschicht, eine Größe vom DIN-A3 oder DIN-A4 Format. Der entsprechende Teilbereich in der bedruckbaren Schicht ist dann 10 bis 30 % kleiner.

Der erfindungsgemäße Etikettenbogen weist eine Schicht eines Haftklebstoffs auf. In einiger. Anwendungen kann der Klebstoff auch ein wärmeaktivierbarer Klebstoff sein. Der Haftkleber hat typischerweise eine Dicke von 10 bis 125 µm, je nach Anwendung bevorzugt etwa 25 bis etwa 75 µm oder 10 bis etwa 50 µm. In einer Ausführungsform ist das Gewicht der Beschichtung des Haftklebers im Bereich von etwa 10 bis etwa 50 g/m² und in einer bevorzugten Ausführungsform etwa 20 bis 35 g/m². Der Haftkleber kann jeder bekannte Haftkleber sein. Diese beinhalten auf Kautschuk basierende Haftkleber, Acrylhaftkleber, Vinyletherhaftkleber, Silikonkleber und Mischungen von zwei oder mehreren davon. Solche Haftklebstoffmaterialien sind in "Adhesion and Bonding", Encyclopaedia of Polymer Science and Engineering, Vol. 1, Seiten 476-576 Interscience Publishers, 2. Ausgabe, 1985 beschrieben. Geeignete Haftklebermaterialien enthalten als Hauptbestandteil ein klebendes Polymer wie Polymere vom Acryltyp, Blockcopolymere, natürliche oder wiedergewonnene Kautschuke, Styrolbutadienkautschuke, statistische Copolymere aus Ethylen und Vinylacetat, Ethylenvinylacrylterpolymere, Polyisobutylenpoly(vinylether) usw. Die Haftklebstoffmaterialien sind typischerweise durch ihre Glasübergangstemperaturen in einem Bereich von etwa -70 °C bis etwa 10 °C charakterisiert.

Andere Materialien zusätzlich zu den oben genannten Harzen können in den Haftklebstoffmaterialien enthalten sein. Diese beinhalten Antioxidantien, Füllmaterialien, Pigmente, Wachse usw. Die Klebstoffmaterialien können eine Mischung aus festen klebrigmachenden Harzen und flüssigen klebrigmachenden Harzen enthalten. Insbesondere bevorzugte Haftkleber sind in US 5,192,612 und US 5,346,766 beschrieben.

Es ist besonders bevorzugt, einen Kleber zu verwenden, der erst nach 1 bis 5 min seine volle Klebkraft entfaltet, um so ein Repositionieren der aufgeklebten Teilfläche der bedruckbaren/bedruckten Schicht zu ermöglichen. Zu solchen Klebern gehören Tiefkühlkleber und sind dem Fachmann grundsätzlich bekannt.

Der Haftkleber kann unter Verwendung von Standardbeschichtungstechniken aufgebracht werden, wie Vorhangbeschichtung, Tiefdruck-Beschichtungsverfahren, Umkehrtiefdruck, Offset-Tiefdruck, Walzenauftragdruck, Bürsten, Kalzenrakelverfahren, vlalzenauftragverfahren mit Luftbürste, Dosierwalzenauftragung, Umkehrwalzenauftragung, t4alzenauftragung mit von unten wirkender Rakel, Eintauchen, Düsenbeschichtung, Sprühen und dgl. Die Anwendung dieser Beschichtungstechniken ist gut bekannt und kann durch einen Fachmann wirksam ausgeführt werden. Weitere Informationen zu den Beschichtungsverfahren sind in "Modern Coating and Drying Technology", von Edward Cohen und Edgar Gutoff, VCH Verlag, 1992, zu finden.

Gemäß einer bevorzugten Ausführungsform können herkömmliche UV-Blocker in der Haftklebstoffschicht enthalten sein.

Die in der transparenten Folie und/oder der Haftklebstoffschicht und/oder dem nichtklebenden Material enthaltenen lichtabsorbierenden Komponenten bewirken, dass die Lichtbeständigkeit eines Aufdrucks, der mit einem Inkjet-Desktop-Drucker oder Laserdrucker auf die bedruckbare Schicht aufgebracht wurde, wesentlich verbessert wird.

Eine alternative Ausführungsform des erfindungsgemäßer. Etikettenbogens zeichnet sich dadurch aus, dass die Haftklebstoffschicht in Form eines Rasters vorliegt. Durch den rasterförmigen Auftrag des Haftklebstoffs entstehen nichtklebende Bereiche, d.h. nichtklebende Kanäle. Der Haftklebstoff liegt in Form von Punkten oder Linien vor, wobei darauf geachtet werden sollte, dass durch das Raster klebstofffrei Kanäle gebildet werden, die sich bis zum Rand der Teilbereiche, d.h. bis zu den Abtrennlinien, erstrecken, um so ein Verschieben von Luftblasen, die nach dem Laminieren zwischen der bedruckbaren Schicht und der transparenten Folie eingeschlossen sein könnten, zu gewährleisten.

Die entstehenden Raster werden als Punktraster, Linienraster (auch als Strichraster bezeichnet) oder Netzraster bezeichnet. Bevorzugt sind Punkt- oder Linienraster.

Als Haftkleber wird ein Haftkleber der oben beschriebenen Art verwendet. Besonders bevorzugt wird in diesem fall ein Kleber verwendet, der ein Repositionieren ermöglicht. Darüber hinaus können auch Kleberdispersionen, wie wässrige Dispersionen, Organisole oder Plastisole, eingesetzt werden. Man geht dabei von Dispersionen mit einem Feststoffgehalt von mindestens 45 Gew.% aus. Vorzugsweise werden für die Auftragung des Haftklebstoffs als Dispersion (hseth)acrylsäureester mit C₄-C₁₂-Alkylresten ausgewählt. Durch Anteile von Acrylnitril oder Acrylamiden sowie Vernetzerzusätzen, z.B. N-Piethylolacrylamid oder Glycidylmethacrylat, in Verbindung mit Hydroxylgruppen tragenden oder polyfunktionellen (Meth)acrylsäureestern, z.B. Butandiol-bisacrylat, kann die Kohäsion bzw. die Stabilität der Dispersion eines Plastisols oder eines Organisols gesteigert werden. Man kann ferner einen Teil des Methacrylesters durch copolymerisierbare Verbindungen wie Vinylacetat oder Vinylpropionat ersetzen. Ferner können geringe Anteile (bis ca. 12 %) (Meth)acrylsaure und/oder andere copolymerisierbare Säuren wie Itakonsäure, Fumarsäure oder Maleinsäure einpolymerisiert sein. Darüber hinaus können dem Haftkleber ein oder mehrere bekannte UV-Blocker zugesetzt werden.

Das Haftklebstoffraster lässt sich durch Flexodruck, Siebdruck oder Tiefdruck aufbringen. Bei dem Siebdruckverfahren, mit dem bevorzugtermaßen ein Punktraster erzeugt wird, kann mit einem Flachsieb oder einem Rundsieb (Rotationssiebdruck) gearbeitet werden.

Der Haftkleber liegt in einem Raster von 12 bis 80, insbesondere 24 bis 50 Linien/cm Substrat vor. Die Form der Rasterelemente, z.B. Durchmesser und Höhe der Punkte oder Linien, und damit auch die Klebkräfte werden bekanntermaßen hauptsächlich durch folgende Faktoren beeinflusst: Art des Auftragungsverfahrens, Parameter des Auftragungsverfahrens (z.B. Maschenweite und -tiefe beim Siebdruck) und physikalische Parameter der aufgetragenen Masse (z.B. Schmelzkleber oder Dispersionskleber), insbesondere deren Viskosität und Thixotropie.

In dieser Ausführungsform wird der Haftkleber bevorzugt mit einem Flächengewicht von 5 bis 20 g/m² (insbesondere 8 bis 15 g/m²) aufgetragen.

Die Rauhigkeit der bedruckbaren Schicht lässt sich mechanisch, beispielsweise durch Prägung, erzeugen oder durch chemische Modifikation der Oberfläche der bedruckbaren Schicht, beispielsweise durch Aufbringen einer porösen Schicht. Als Beispiele für eine solche poröse Beschichtung können dem Fachmann bekannte Inkjet-Beschichtungen oder "Microporous Coatings" genannt werden.

Gemäß einer weiteren alternativen Ausführungsform des erfindungsgemäßen Etikettenbogens weist die Oberseite der bedruckbaren Schicht eine Rauhigkeit von 4 bis 50 µm (DIN 4768), bevorzugt 10 bis 25 µm, auf. Wenn die Oberseite der bedruckbaren Schicht eine Rauhigkeit in dem oben angegebenen Bereich aufweist, entstehen während der Laminierung nichtklebende Bereiche/Kanäle zwischen der bedruckbaren Schicht und der Haftklebstoffschicht, wenn die raue Oberseite auf die Haftklebstoffschicht geklebt wird. Durch diese nichtklebenden Bereiche/Kanäle lassen sich wiederum eingeschlossene Luftblasen zu den Rändern hin ausstreichen.

Es ist selbstverständlich, dass die oben beschriebenen Ausführungsformen auch miteinander kombiniert werden können, beispielsweise dass das bedruckbare Material sowohl auf der Ober- als auch Unterseite aufgraut ist.

Unter Verwendung des oben beschriebenen Etikettenbogens lässt sich das erfindungsgemäße Etikett durch das folgende Verfahren herstellen, das die Schritte umfasst:
(a) Heraustrennen einer Teilfläche der bedruckbaren Schicht, einschließlich Releaseschicht, aus dem oben erwähnten Etikettenbogen gemäß der Erfindung,
(b) Aufkleben der in Schritt (a) herausgetrennten Teilfläche mit der Seite der bedruckbaren Schicht auf die Haftklebstoffschicht an dieselbe Stelle im Etikettenbogen, an der die bedruckbare Schicht, einschließlich Releaseschicht, zuvor in Schritt (a) herausgetrennt wurde und
(c) Heraustrennen des Etiketts, umfassend eine Teilfläche der transparenten Folie, eine Teilfläche der zwischenliegenden Haftklebstoffschicht und die darauf in Schritt (b) aufgeklebte Teilfläche der bedruckbaren Schicht, einschließlich der darauf aufgebrachten Releaseschicht.

In dem oben beschriebenen Verfahren zur Herstellung des erfindungsgemäßen Etiketts erfüllt die transparente Folie gleichzeitig die Funktion eines Trägermaterials im Etikettenbogen. Daher sind die bedruckbare Schicht und die transparente Laminierfclie in einem einziger. Etikettenbogen integriert. Diese Ausführungsform ist deshalb vorteilhaft, weil die Handhabung sehr einfach ist und bei der Herstellung des erfindungsgemäßen Etiketts nicht mit zwei separaten Bögen, einem Etikettenbogen und einem Laminierfolienbogen, gearbeitet werden muss. Ferner ergibt sich in Schritt (b) nach dem Heraustrennen der Teilfläche der bedruckbaren Schicht durch das entstandene Fenster eine Zentrierhilfe, wodurch ein positionsgenaues Laminieren der bedruckbaren Schicht mit der Folie ermöglicht wird. Darüber hinaus können durch die Auftragung der Haftklebstoffschicht in Form eines Rasters bzw. durch die Verwendung einer bedruckbaren Schicht, die auf ihrer Oberseite eine Rauhigkeit von 4 bis 50 µm (DIN 4768) aufweist, unerwünschte Luftblasen aus dem Laminat entfernt werden. Dies ist insbesondere dann wichtig, wenn großformatige laminierte Etiketten hergestellt werden sollen, beispielsweise mit DIN-A4 oder DIN-A3 Format.

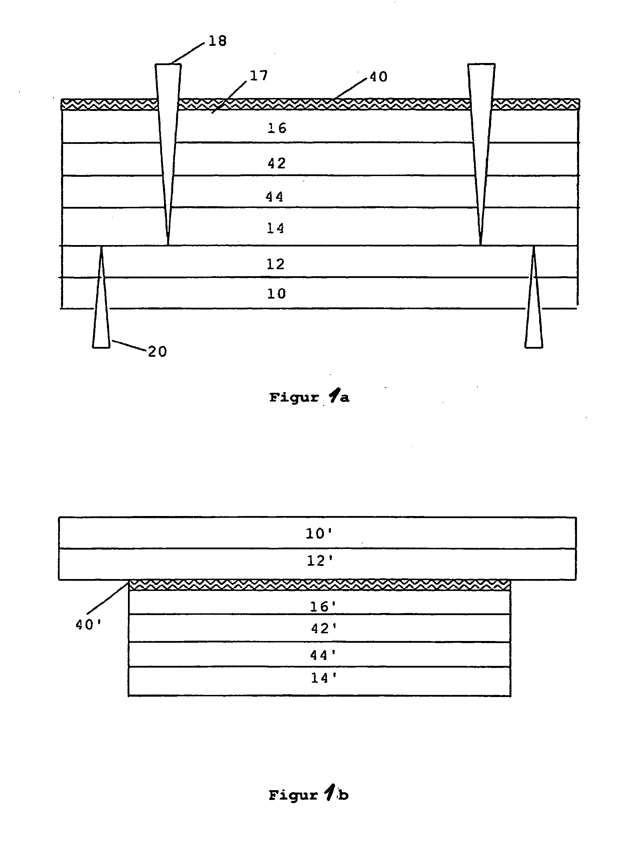

Anhand der beigefügten Zeichnungen werden die Ausführungsformen der Erfindung näher erläutert, wobei Fig. 1a einen Etikettenbogen mit einer porösen Oberseite der bedruckbaren Schicht darstellt und Fig. 1b das daraus hergestellte laminierte Etikett.

Figur 1a stellt: einen erfindungsgemäßen Etikettenbogen dar mit einem transparenten Trägermaterial (10), einer Haftklebstoffschicht (12), einer Releaseschicht (14), einer PET-Folie (44), einer Haftklebstoffschicht (42) und einer bedruckbaren Schicht (16). Auf die Oberseite (17) der bedruckbaren Schicht ist eine Beschichtung mit einer Rauhigkeit in dem oben angegebenen Bereich aufgetragen. Der Etikettenbogen weist Stanzlinien auf, wodurch Teilflächen gebildet werden. Diese Teilflächen bestehen einerseits aus der Releaseschicht (19), der PET-Folie (94), der Haftklebstoffschicht (42) und der mit der porösen Schicht (40) beschichteten bedruckbaren Schicht (16) und andererseits aus der Haftklebstoffschicht (12) und der transparenten Folie (10). Die Teilfläche aus der Haftklebstoffschicht (12) und der transparenten Folie (10) ist größer als die Teilfläche aus Releaseschicht (14), PET-Folie (44), Haftklebstoffschicht (42) und beschichteter bedruckbarer Schicht (16). Bevorzugt wird als Kleber der Haftklebstoffschicht (12) ein repositionierbarer Kleber eingesetzt.

In dem Laminierungsschritt wird der Teilbereich, der die Schichten Releaseschicht (14), PET-Folie (44), Haftklebstoffschicht (42) und beschichtete bedruckbare Schicht (16) enthält, aus dem Etikettenbogen herausgetrennt und umgekehrt in das entstandene Fenster auf die freigelegte Haftklebstoffschicht (12) geklebt, so dass nun die poröse Schicht (40) direkt an die Haftklebstoffschicht (12) anschließt. Aufgrund der Rauhigkeit der porösen Schicht (40) entstehen nichtklebende Bereiche bzw. Kanäle zwischen poröser Schicht (40) und der Haftklebstoffschicht (12), wodurch sich eingeschlossene Luftblasen entfernen lassen.

Durch Heraustrennen der so verklebten Teilflächen aus dem Etikettenbogen entsteht ein Etikett mit dem in Figur 1b dargestellten Aufbau: transparente Laminierfolie (10'), Haftklebstoffschicht (12'), poröse Beschichtung (40'), bedruckbare Schicht (16'), Haftklebstoffschicht (42'), PET-Folie (44'), Releaseschicht (14').

Anstatt einer porösen Beschichtung (40) lässt sich auch eine bedruckbare Schicht (16) verwenden, die von sich aus bereits eine raue Oberfläche aufweist, z.B. ein Papier, das von Natur auf eine Rauhigkeit in dem oben angegebenen Bereich aufweist oder eine durch Prägen erzeugte Rauhigkeit.

Konkrete Konstruktionen des erfindungsgemäßen Etikettenbogens, bei dem eine bedruckbare Schicht verwendet wird, die eine raue Oberfläche, ggf. durch Beschichtung, aufweist, sind im folgenden aufgeführt.

### 1. Konstruktion für Hinweisschilder

Konstruktion weist Schichten in folgender Reihenfolge auf:
- transparente Folie: 50 µm PET-Folie
- permanenter repositionierbarer Klebstoff, vollflächig beschichtet
- Releaseschicht: Silikonschicht
- 36µm -PET-Folie
- permanenter Kleber
- bedruckbare Schicht: 70g/m² Laser und Inkjet geeignetes Material mit einer Sheffield Rauhigkeit (ISO/DIN 8791-3) von 85

Ein DIN-A4 Bogen wird mit der oben angegebenen Konstruktion hergestellt. Auf die bedruckbare Schicht sind Stanzlinien aufgebracht, so dass 2 Teilflächen (Etiketten) mit einer Größe von 150 x 100 mm entstehen. In die transparente Folie werden ebenfalls Stanlinien aufgebracht, so dass 2 Teilflächen mit einer Größe von 180 x 130 mm entstehen. Daraus lässt sich ein laminiertes Hinweisschild herstellen mit einer Größe von 150 x 100 mm. Die Trägerfolie steht um das bedruckbare Etikett rundum 15 mm über.

Jegliche andere Formate sind selbstverständlich ebenfalls herstellbar.

### 2. Konstruktion für Photo-Etiketten

Konstruktion weist Schichten in folgender Reihenfolge auf:
- transparente Folie: 50 µm PET-Folie
- permanenter Klebstoff, vollflächig beschichtet
- Silikonschicht
- 36µm -PET-Folie
- permanenter Kleber
- bedruckbare Fläche: 90g/m² Inkjet beschichtetes Papier mit einer Sheffield Rauhigkeit (ISO/DIN 8791-3) von 40

Ein DIN-A4 Bogen wird mit der oben angegebenen Konstruktion hergestellt. Auf die bedruckbare Schicht sind Stanzlinien aufgebracht, so dass 2 Teilflächen (Etiketten) mit einer Größe von 150 x 100 mm entstehen. In die transparente Folie werden ebenfalls Stanlinien aufgebracht, so dass 2 Teilflächen mit einer Größe von 160 x 110 mm entstehen. Daraus lässt sich ein laminiertes Photo zum Einkleben ins Album mit einer Größe von 150 x 100 mm herstellen. Die Trägerfolie steht um das bedruckbare Etikett/Photo rundum 5 mm über.

Jegliche andere Formate sind selbstverständlich ebenfalls herstellbar.

Die erfindungsgemäßen Etikettenbögen können für die Herstellung von beispielsweise Hinweisschilder oder Photoetiketten verwendet werden.

## Patentansprüche

1. Etikettenbogen, umfassend
in folgender Reihenfolge: ein Trägermaterial (10), eine Haftklebstoffschicht (12), eine Releaseschicht (14) und eine bedruckbare Schicht (16),
wobei das Trägermaterial eine transparente Folie darstellt und
sowohl die bedruckbare Schicht, einschließlich Releaseschicht, einerseits als auch das Trägermaterial, einschließlich Haftklebstoffschicht, andererseits eine oder mehrere Abtrennlinien aufweisen, die so aufgebracht sind, dass Teilbereiche gebildet werden und die Abtrennlinie(n) in der Trägerschicht (20), einschließlich Haftklebstoffschicht, die Abtrennlinie (n) in der bedruckbaren Schicht (18), einschließlich Releaseschicht, randseitig überragt (überragen),
**dadurch gekennzeichnet, dass**
die Haftklebstoffschicht (12) in Form eines Rasters vorliegt, wobei durch das Raster klebstofffreie Kanäle gebildet werden, die sich bis zum Rand der Teilbereiche erstrecken, oder
die bedruckbare Schicht (16) auf ihrer Oberseite (17) eine Rauhigkeit von 4 bis 50 µm gemäß DIN 4768 aufweist.

2. Etikettenbogen gemäß Anspruch 1, wobei die Abtrennlinien in der Trägerschicht, einschließlich Haftklebstoffschicht, die äußeren Kanten des Etikettenbogens sind.

3. Etikettenbogen gemäß Anspruch 1 oder 2, wobei die transparente Folie und/oder die Haftklebstoffschicht eine lichtabsorbierende Komponente enthält.

4. Etikettenbogen gemäß einem oder mehreren der vorherigen Ansprüche, wobei zwischen die Releaseschicht (14) und die bedruckbare Schicht (16) eine PET-Folie (44) und eine Haftkleberschicht (42) aufgebracht sind.

5. Etikettenbogen gemäß Anspruch 1 oder 2, wobei die bedruckbare Schicht (16) auf ihrer Oberseite Rauhigkeit von 10 bis 25 µm aufweist.

6. Etikett, umfassend in folgender Reihenfolge: eine transparente Folie (10'), eine Haftklebstoffschicht (12'), eine bedruckbare Schicht (16') und eine darauf aufgebrachte Releaseschicht (14'),
**dadurch gekennzeichnet, dass**
die Haftklebstoffschicht (12') in Form eines Rasters vorliegt, wobei durch das Raster klebstofffreie Kanäle gebildet werden, die sich bis zum Rand erstrecken, oder
die bedruckbare Schicht (16') auf ihrer Oberseite (17') eine Rauhigkeit von 4 bis 50 µm gemäß DIN 4768 aufweist.

7. Verfahren zur Herstellung des Etiketts gemäß Anspruch 6, umfassend die Schritte
(a) Heraustrennen einer Teilfläche der bedruckbaren Schicht (16), einschließlich Releaseschicht (14), aus einem Etikettenbogen gemäß Anspruch 1,
(b) Aufkleben der in Schritt (a) herausgetrennten Teilfläche mit der Seite der bedruckbaren Schicht (16) auf die Haftklebstoffschicht (12) an dieselbe Stelle im Etikettenbogen, an der die bedruckbare Schicht, einschließlich Releaseschicht, zuvor in Schritt (a) herausgetrennt wurde und
(c) Heraustrennen des Etiketts, umfassend eine Teilfläche der transparenten Folie (10'), einschließlich einer Teilfläche der zwischenliegenden Haftklebstoffschicht (12') und die darauf in Schritt (b) aufgeklebte Teilfläche der bedruckbaren Schicht (16'), einschließlich der darauf aufgebrachten Releaseschicht (14').

## Claims

1. Sheet of labels, comprising
in the following sequence: a support material (10), a layer of pressure-sensitive adhesive (12), a release layer (14) and a printable layer (16),
wherein the support material is a transparent film and
both the printable layer, including release layer, on the one hand, and the support layer, including pressure-sensitive adhesive layer, on the other hand, have one or more detachment lines which are applied in such a way that subregions are formed and the detachment line(s) in the support layer (20), including pressure-sensitive adhesive layer, overlaps (overlap) at the edge the detachment line(s) in the printable layer (18), including release layer,
**characterised in that**
the layer of pressure-sensitive adhesive (12) is present in the form of a grid, wherein due to the grid pattern channels free of adhesive are formed which extend up to the edge of the subregions, or
the printable layer (16) exhibits on its upper side (17) a roughness of 4 to 50 µm according to DIN 4768.

2. Sheet of labels according to claim 1, wherein the detachment lines in the support layer, including layer of pressure-sensitive adhesive, are the outer edges of the sheet of labels.

3. Sheet of labels according to claim 1 or 2, wherein the transparent film and/or layer of pressure-sensitive adhesive contain a light-absorbing component.

4. Sheet of labels according to one or more of the preceding claims, wherein between the release layer (14) and the printable layer (16) a PET film (44) and a layer of pressure-sensitive adhesive (42) are applied.

5. Sheet of labels according to claim 1 or 2, wherein the printable layer (16) exhibits on its upper side a roughness of 10 to 25 µm.

6. Label, comprising in the following sequence: a transparent film (10'), a layer of pressure-sensitive adhesive (12'), a printable layer (16') and a release layer (14') applied thereon,
**characterised in that**
the pressure-sensitive adhesive layer (12') is present in the form of a grid, wherein due to the grid pattern channels free of adhesive are formed which extend up to the edge, or
the printable layer (16') exhibits on its upper side (17') a roughness of 4 to 50 µm according to DIN 4768.

7. Method for producing the label according to claim 6, comprising the steps
(a) separation out of a subarea of the printable layer (16), including release layer (14), from a sheet of labels according to claim 1,
(b) sticking of the subarea separated out in step (a) having the side of the printable layer (16) onto the layer of pressure-sensitive adhesive (12) at the same point in the sheet of labels at which the printable layer, including release layer, had been separated out in step (a), and
(c) separation out of the label comprising a subarea of the transparent film (10'), including a subarea of the intervening pressure-sensitive adhesive layer (12') and the subarea of the printable layer (16'), including the release layer (14') applied thereto, stuck thereon in step (b).

## Revendications

1. Feuille pour étiquettes, comprenant
dans l'ordre de succession suivant : un matériau support (10), une couche d'adhésif de contact (12), une couche de désolidarisation (14) et une couche imprimable (16),
le matériau support constituant une feuille transparente, et
tant la couche imprimable, y compris la couche de désolidarisation, d'une part, ainsi qu'également le matériau support, y compris la couche d'adhésif de contact, d'autre part, présentent une ou plusieurs lignes de séparation, appliquée(s) de manière que soient formées des zones partielles, et la ou les lignes de séparation dans la couche support (20), y compris la couche d'adhésif de contact, dépasse (dépassent) en bordure, la ou les lignes de séparation dans la couche (18) imprimable, y compris la couche de désolidarisation,
**caractérisée en ce que**
la couche d'adhésif de contact (12) se présente sous la forme d'une trame, sachant qu'au moyen de la trame sont formés des canaux exempts d'adhésif, s'étendant jusqu'au bord des zones partielles, ou
la couche (16) imprimable présente, sur sa face supérieure (17), une rugosité de 4 à 50 µm selon DIN 4768.

2. Feuille pour étiquette selon la revendication 1, les lignes de séparation dans la couche support, y compris dans la couche d'adhésif de contact, étant les bords extérieurs de la feuille d'étiquette.

3. Feuille pour étiquette selon la revendication 1 ou 2, la feuille transparente et/ou la couche d'adhésif de contact contenant un composant absorbant de la lumière.

4. Feuille pour étiquette selon l'une ou plusieurs des revendications précédentes, entre la couche d'adhésif de désolidarisation (14) et la couche (16) imprimable étant appliquées une feuille en PET (44) et une couche d'adhésif de contact (42).

5. Feuille pour étiquette selon la revendication 1 ou 2, la couche imprimable (16) présentant une rugosité de 10 à 25 µm sur sa face supérieure.

6. Etiquette, comprenant dans l'ordre de succession suivant : une feuille (10') transparente, une couche d'adhésif de contact (12'), une couche (16') imprimable et une couche de désolidarisation (14') appliquée sur celle-ci,
**caractérisée en ce que**
la couche d'adhésif de contact (12') se présente sous la forme d'une trame, au moyen de la trame étant formés des canaux exempts d'adhésif, qui s'étendent jusqu'au bord, ou
la couche (16') imprimable présente sur sa face supérieure (17') une rugosité de 4 à 50 µm selon DIN 4768.

7. Procédé de fabrication de l'étiquette selon la revendication 6, comprenant les étapes suivantes :
(a) séparation d'une surface partielle de la couche (16) imprimable, y compris la couche de désolidarisation (14), à partir d'une feuille pour étiquettes selon la revendication 1,
(b) application par collage de la surface partielle ayant été séparée à l'étape (a), avec la face de la couche (16) imprimable placée sur la couche de désolidarisation (12), au même endroit dans la feuille pour étiquette, que celui auquel la couche imprimable, y compris la couche de désolidarisation, avait été préalablement séparée à l'étape (a), et
(c) séparation de l'étiquette, comprenant une surface partielle de la feuille (10') transparente, y compris une surface partielle de la couche d'adhésif de contact (12') intercalée et la surface partielle, rapportée par collage sur elle à l'étape (b) de la couche (16') imprimable, y compris la couche de désolidarisation (14') appliquée par dessus.
